# EUROPEAN PATENT SPECIFICATION

(11) **EP 3 888 939 B1**
(45) Date of publication and mention of the grant of the patent: **25.06.2025**
(21) Application number: 19891438.4
(22) Date of filing: 22.11.2019
(51) Int. Cl.: B60C 1/00, C08L 7/00, C08L 15/00, C08K 3/04, C08K 3/36

(54) **RUBBER COMPOSITION FOR TIRE**
KAUTSCHUKZUSAMMENSETZUNG FÜR REIFEN
COMPOSITION DE CAOUTCHOUC POUR PNEUMATIQUE

(30) Priority: 30.11.2018 JP 2018225400
(43) Date of publication of application: 06.10.2021
(73) Proprietor: The Yokohama Rubber Co., Ltd., Hiratsuka-shi, Kanagawa 254-8601 (JP)
(72) Inventor: SHIMIZU Katsunori, Hiratsuka-shi, Kanagawa 254-8601 (JP); OZAKI Makoto, Hiratsuka-shi, Kanagawa 254-8601 (JP)
(74) Representative: Dilg, Haeusler, Schindelmann Patentanwaltsgesellschaft mbH
(86) International application number: PCT/JP2019/045803
(87) International publication number: WO 2020/110941

(56) References cited:
- WO-A1-2018/131694
- DE-A1- 102015 210 421
- JP-A- 2006 104 372
- JP-A- 2014 173 060
- JP-A- S63 278 947
- US-A1- 2014 275 331
- US-B2- 8 404 766

## Description

### Technical Field

The present invention relates to a rubber composition for tires that is intended mainly for use in an undertread portion of a pneumatic tire.

### Background Art

For a pneumatic tire, enhancement of fuel economy performance during travel has been demanded so as to reduce the environmental impact. To that end, heat build-up of a rubber composition constituting each part of a pneumatic tire has been suppressed. In recent years, to further enhance the fuel economy performance, there is, for example, a demand for suppressing heat build-up in a rubber composition constituting an undertread portion that is arranged in an inner side of a cap tread portion forming a road contact surface of a pneumatic tire.

As an indicator of the heat build-up in a rubber composition, tan δ at 60°C (hereinafter, referred to as "tan δ (60°C)") determined by dynamic viscoelasticity measurement is typically used, and smaller tan δ (60°C) of the rubber composition indicates less heat build-up. Examples for methods of reducing the tan δ (60°C) of a rubber composition include reducing a blended amount of filler such as carbon black, and increasing the particle size of carbon black. Alternatively, blending silica has also been proposed (e.g., see JP 2015-059181 A). However, with these methods, rubber hardness and fatigue resistance are not necessarily adequately achieved, and when these methods are employed for tires (especially, when employed for undertread portions), effects on steering stability and durability are a concern. Thus, for a rubber composition for tires that is intended for use in an undertread portion, further measures have been demanded to enhance low rolling resistance while excellent steering stability and durability are maintained in tires. US20140275331 discloses a rubber composition for a base tread of a tire characterized by good fuel efficiency, handling stability, and durability in a balanced manner.

### Summary of Invention

### Technical Problem

An object of the present invention is to provide a rubber composition for tires that is intended mainly for use in an undertread portion of a pneumatic tire and having a low rolling resistance and excellent steering stability and durability in tires.

### Solution to Problem

The rubber composition for tires according to the present invention that achieves the object described above is a rubber composition for tires including a rubber component containing 50 mass% or greater of a natural rubber and from 15 mass% to 50 mass% of a terminal-modified butadiene rubber per 100 parts by mass of the rubber component, a filler containing carbon black and silica that is blended into the rubber component at a mass ratio from 0.1 to 0.5 between a blended amount of the silica and a blended amount of the filler, the rubber composition having a hardness of 73 or greater, and a modulus of repulsion elasticity at 40°C of 60% or greater. Thereby, the hardness of the rubber composition was measured at a temperature of 20°C by a type A durometer in accordance with JIS K 6253 and the modulus of repulsion elasticity of the rubber composition was measured at a temperature of 40°C by a Luepke impact resilience tester in accordance with JIS K 6255.

### Advantageous Effects of Invention

The rubber composition for tires according to an embodiment of the present invention can enhance the steering stability and durability in tires while the rolling resistance is reduced because the rubber composition uses a terminal-modified butadiene rubber together with a natural rubber as a rubber component and uses carbon black and silica in combination as a filler, and the hardness and the modulus of repulsion elasticity of the rubber composition are adequately set high as described above. In particular, the blended amount of silica relative to the total amount of carbon black and silica is set as described above while a combination of carbon black and silica and the terminal-modified butadiene rubber is used, while the heat build-up is not deteriorated, the steering stability and the durability can be effectively enhanced in tires, and these performances can be improved in a well-balanced manner.

In an embodiment of the present invention, the molecular weight distribution (Mw/Mn) determined based on the weight average molecular weight (Mw) and the number average molecular weight (Mn) of the terminal-modified butadiene rubber is preferably 2.0 or less. By allowing the molecular weight distribution to be narrow, even better rubber physical properties are achieved, and thus it is advantageous for improving the steering stability and the durability in tires while the rolling resistance is reduced. Note that, in an embodiment of the present invention, "weight average molecular weight Mw" and "number average molecular weight Mn" is measured by gel permeation chromatography (GPC) based on calibration with polystyrene standards.

In an embodiment of the present invention, the functional group at a terminal of the terminal-modified butadiene rubber is preferably at least one selected from the group consisting of a hydroxy group, an amino group, an alkoxyl group, and an epoxy group. By this, affinity between carbon black and silica is enhanced, and dispersibility of carbon black and silica is further improved, and thus rubber hardness and adhesiveness can be more effectively enhanced while heat build-up is maintained low, and thus it is advantageous to improve these performances in a well-balanced manner.

In an embodiment of the present invention, the blended amount of the filler per 100 parts by mass of the rubber component is preferably 55 parts by mass or greater. As described above, by blending the sufficient amount of carbon black and silica, the rubber hardness can be more effectively enhanced while the heat build-up is maintained low, and thus it is advantageous to improve these performances in a well-balanced manner.

In an embodiment of the present invention, from 1.0 part by mass to 4.0 parts by mass of an amine-based anti-aging agent is preferably blended per 100 parts by mass of the rubber component. Furthermore, greater than 0 parts by mass but not greater than 2.0 parts by mass or less of a wax is preferably blended per 100 parts by mass of the rubber component. By blending the anti-aging agent and/or the wax, cracking resistance and processability can be improved.

The rubber composition for tires according to an embodiment of the present invention is preferably used for an undertread portion of a pneumatic tire, and a pneumatic tire using the rubber composition for tires according to an embodiment of the present invention in the undertread portion can improve fuel economy performance while excellent steering stability and durability are maintained.

### Description of Embodiments

In the rubber composition for tires according to an embodiment of the present invention, the rubber component is a diene rubber and always contains a natural rubber and a terminal-modified butadiene rubber.

As a natural rubber, a rubber that is typically used in rubber compositions for tires can be used. By allowing a natural rubber to be blended, sufficient rubber strength as a rubber composition for tires can be achieved. When the entire amount of the diene rubber is 100 mass%, the blended amount of the natural rubber is 50 mass% or greater, preferably from 50 mass% to 85 mass%, and more preferably from 60 mass% to 85 mass%. When the blended amount of the natural rubber is less than 50 mass%, the rubber strength is reduced.

The terminal-modified butadiene rubber is a butadiene rubber in which one terminal or both terminals of the molecular chain is modified with an organic compound having a functional group. By blending such a terminal-modified butadiene rubber, affinity with carbon black and silica is increased and dispersibility is improved, rubber hardness can be increased by further improving effects of carbon black and silica while low heat build-up is maintained. Examples of the functional group that modifies a terminal of the molecular chain include an alkoxysilyl group, a hydroxyl group (hydroxy group), an aldehyde group, a carboxyl group, an amino group, an amide group, an imino group, an alkoxyl group, an epoxy group, an amide group, a thiol group, an ether group, and a siloxane linking group. Among these, at least one selected from the group consisting of a hydroxyl group (hydroxy group), an amino group, an amide group, an alkoxyl group, an epoxy group, and a siloxane linking group is preferred. Note that the siloxane linking group is a functional group having an -O-Si-O- structure.

When the entire amount of the diene rubber is 100 mass%, the blended amount of the terminal-modified butadiene rubber is from 15 mass% to 50 mass%, and preferably from 30 mass% to 40 mass%. When the blended amount of the terminal-modified butadiene rubber is less than 15 mass%, the fuel efficiency is deteriorated. When the blended amount of the terminal-modified butadiene rubber is greater than 50 mass%, the rubber strength is reduced.

The molecular weight distribution (Mw/Mn) of the terminal-modified butadiene rubber is preferably 2.0 or less, and more preferably from 1.1 to 1.6. As described above, by using a terminal-modified butadiene rubber having a narrow molecular weight distribution, even better rubber physical properties are achieved, and thus the steering stability and the durability can be effectively enhanced in tires while the rolling resistance is reduced. When the molecular weight distribution (Mw/Mn) of the terminal-modified butadiene rubber is greater than 2.0, a hysteresis loss becomes greater and heat build-up of the rubber becomes greater, and compression set resistance is reduced.

The glass transition temperature Tg of the terminal-modified butadiene rubber used in an embodiment of the present invention is preferably -85°C or lower, and more preferably from -90°C to -100°C. By setting the glass transition temperature Tg as described above, the heat build-up can be effectively reduced. When the glass transition temperature Tg is higher than - 80°C, the effect of reducing heat build-up cannot be sufficiently obtained. Note that the glass transition temperature Tg of the natural rubber is not particularly limited and, for example, can be set to from -70°C to -80°C.

The terminal-modified butadiene rubber used in an embodiment of the present invention has a vinyl content of preferably from 0.1 mass% to 20 mass%, and more preferably from 0.1 mass% to 15 mass%. When the vinyl content of the terminal-modified butadiene rubber is less than 0.1 mass%, affinity to carbon black and silica becomes insufficient, and it becomes difficult to sufficiently reduce the heat build-up. When the vinyl content of the terminal-modified butadiene rubber is greater than 20 mass%, the glass transition temperature Tg of the rubber composition is increased, and the rolling resistance and the wear resistance cannot be adequately improved. Note that the vinyl unit content of the terminal-modified butadiene rubber is measured by infrared spectroscopy (the Hampton method). The increase or decrease in the vinyl unit content in the terminal-modified butadiene rubber can be appropriately adjusted by an ordinary method such as a catalyst.

The rubber composition for tires according to an embodiment of the present invention may contain another diene rubber besides the natural rubber and the terminal-modified butadiene rubber. Examples of such another diene rubber include terminally-unmodified butadiene rubber, styrene-butadiene rubber, isoprene rubber, and acrylonitrile-butadiene rubber. These diene rubbers may be used alone or as a desirable blend thereof.

In the rubber composition for tires according to an embodiment of the present invention always contains both carbon black and silica as fillers. By blending these fillers, strength of the rubber composition can be enhanced. In particular, by blending a combination of silica and the modified butadiene rubber described above, while the heat build-up is maintained low, the rubber hardness can be effectively enhanced. These fillers are blended in a manner that the mass ratio of silica relative to the total amount of carbon black and silica is from 0.1 to 0.5, and preferably from 0.15 to 0.3. When the mass ratio of silica is not in this range, the effect of enhancing rubber hardness and adhesiveness while the heat build-up is maintained low cannot be achieved. In particular, when the mass ratio of silica is excessively large, the adhesiveness of the rubber composition is reduced, and the durability in tires may be deteriorated.

The blended amount of the fillers including carbon black and silica is not particularly limited as long as the blended amount satisfies the mass ratio described above, and the blended amount of the fillers is preferably 55 parts by mass or greater, and more preferably from 70 parts by mass to 90 parts by mass, per 100 parts by mass of the diene rubber described above. When the blended amount of the fillers is less than 55 parts by mass, the hardness of the rubber composition is reduced. Note that, based on the relationship between the blended amount of the fillers and the mass ratio of silica, the blended amount of silica is preferably from 20 parts by mass to 50 parts by mass, more preferably from 20 parts by mass to 40 parts by mass, per 100 parts by mass of the diene rubber, and the blended amount of carbon black is preferably from 30 parts by mass to 60 parts by mass, and more preferably from 35 parts by mass to 50 parts by mass, per 100 parts by mass of the diene rubber.

Carbon black for use in an embodiment of the present invention has the nitrogen adsorption specific surface area N₂SA of preferably 140 m²/g or less, and more preferably from 100 m²/g to 130 m²/g. By blending a combination of carbon black having such a large particle diameter and the modified butadiene rubber described above, while the heat build-up is maintained low, the rubber hardness can be effectively enhanced. When the nitrogen adsorption specific surface area N₂SA of carbon black is greater than 150 m²/g, the heat build-up is deteriorated. Note that, in an embodiment of the present invention, the nitrogen adsorption specific surface area N₂SA of carbon black is measured in accordance with JIS 6217-2.

Silica for use in an embodiment of the present invention has the CTAB adsorption specific surface area of preferably from 140 m²/g to 250 m²/g, and more preferably from 150 m²/g to 220 m²/g. By using such silica, the heat build-up can be improved. When the CTAB adsorption specific surface area of silica is less than 130 m²/g, the rubber strength is reduced. When the CTAB adsorption specific surface area of silica is greater than 250 m²/g, the heat build-up is deteriorated. Note that, in an embodiment of the present invention, the CTAB adsorption specific surface area of silica is measured in accordance with ISO 5794.

When silica is used as described above, a silane coupling agent is preferably used together. The blended amount of the silane coupling agent is preferably from 5 mass% to 10 mass%, and more preferably from 7 mass% to 9 mass%, relative to the mass of silica. By blending the silane coupling agent as described above, dispersibility of silica is improved, and reinforcing property for the rubber component can be further enhanced. When the blended amount of the silane coupling agent is less than 5 mass% of the mass of silica, the effect of improving the dispersibility of silica cannot be sufficiently achieved. When the blended amount of the silane coupling agent is greater than 10 mass% of the mass of silica, the silane coupling agent undergoes condensation, and the desired effect cannot be achieved. The type of the silane coupling agent is not particularly limited and is preferably a sulfur-containing silane coupling agent. Examples thereof include bis-(3-triethoxysilylpropyl)tetrasulfide, bis-(3-triethoxysilylpropyl)disulfide, 3-trimethoxysilylpropyl benzothiazole tetrasulfide, γ-mercaptopropyltriethoxysilane, and 3-octanoylthiopropyltriethoxysilane.

The rubber composition according to an embodiment of the present invention can contain other inorganic fillers besides carbon black and silica described above. Examples of other inorganic fillers include clay, talc, calcium carbonate, mica, aluminum hydroxide, and the like.

In an embodiment of the present invention, an amine-based anti-aging agent and/or a wax is preferably contained. By blending these, cracking resistance and processability can be improved. The blended amount of the amine-based anti-aging agent is preferably from 1.0 part by mass to 4.0 parts by mass, and more preferably from 1.5 parts by mass to 3.5 parts by mass, per 100 parts by mass of the rubber component. The blended amount of the wax is preferably greater than 0 parts by mass but not greater than 2.0 parts by mass, and more preferably from 0.1 parts by mass to 2.0 parts by mass, per 100 parts by mass of the rubber component. The amine-based anti-aging agent and the wax may be separately blended or may be used in combination. When the blended amount of the amine-based anti-aging agent is less than 1.0 part by mass, effect of improving the cracking resistance and the processability is not expected and, in particular, cracking resistance is reduced. When the blended amount of the amine-based anti-aging agent is greater than 4.0 parts by mass, the processability is reduced. When the blended amount of the wax is greater than 2.0 parts by mass, the processability is reduced.

In the rubber composition for a tire according to an embodiment of the present invention, compounding agents other than those above may also be added. Examples of other compounding agents include various compounding agents generally used in pneumatic tires, such as vulcanization or crosslinking agents, vulcanization accelerators, anti-aging agents other than amine-based anti-aging agents, liquid polymers, thermosetting resins, and thermoplastic resins. These compounding agents can be compounded in typical amounts conventionally used so long as the object of the present invention is not hindered. As a kneader, a typical kneader for a rubber, such as a Banbury mixer, a kneader, or a roller may be used.

The hardness of the rubber composition for tires according to an embodiment of the present invention formed from such composition is 73 or greater, preferably from 75 to 80, and more preferably from 76 to 78. Furthermore, the modulus of repulsion elasticity at 40°C of the rubber composition for tires according to an embodiment of the present invention is 60% or greater, preferably from 60% to 65%, and more preferably from 62% to 65%. Because the rubber composition according to an embodiment of the present invention has such physical properties, the steering stability and the durability can be improved in tires while the rolling resistance is reduced. When the hardness is less than 73, the steering stability in tires is deteriorated. When the modulus of repulsion elasticity is less than 60%, the heat build-up is deteriorated, and the rolling resistance cannot be reduced. Note that these hardness and modulus of repulsion elasticity are not only set by the composition described above and are physical properties that can be adjusted also by, for example, kneading conditions and kneading methods.

Because the rubber composition for tires according to an embodiment of the present invention has the composition and physical properties described above, the steering stability and the durability can be improved when a tire is formed while the rolling resistance is reduced. Specifically, because the terminal-modified butadiene rubber is used in combination with the natural rubber as the rubber component, carbon black and silica as the fillers are used in combination at the appropriate mass ratio, these fillers and the terminal-modified butadiene rubber are used in combination, and the hardness and the modulus of repulsion elasticity of the rubber composition are sufficiently increased as described above, the steering stability and the durability when a tire is formed can be improved while the rolling resistance is reduced, and these performances can be improved in a well-balanced manner. Thus, the rubber composition for tires according to an embodiment of the present invention is preferably used for an undertread portion of a pneumatic tire, and a pneumatic tire using the rubber composition for tires according to an embodiment of the present invention in the undertread portion can improve fuel economy performance while excellent steering stability and durability are maintained.

The present invention is further explained below by examples. However, the scope of the present invention is not limited to these examples.

### Example

Compounding ingredients other than vulcanization accelerators and sulfur were weighed for 28 types of rubber compositions shown in Tables 1 to 3 (Standard Example 1, Comparative Examples 1 to 11, and Examples 1 to 16). These compounding ingredients were kneaded in a 1.8 L sealed Banbury mixer for 5 minutes. Then, a master batch was discharged at a temperature of 150°C and cooled at room temperature. The master batch was then added to the 1.8 L sealed Banbury mixer, and the vulcanization accelerators and sulfur were added. Then, the mixture was mixed for 2 minutes to produce a rubber composition. Next, the rubber composition thus obtained was press-vulcanized in a predetermined mold at 160°C for 20 minutes to fabricate a vulcanized rubber test piece.

Note that, in Tables 1 to 3, the hardness of the rubber composition was measured at a temperature of 20°C by a type A durometer in accordance with JIS K 6253. Furthermore, the modulus of repulsion elasticity of the rubber composition was measured at a temperature of 40°C by a Luepke impact resilience tester in accordance with JIS K 6255.

For the obtained rubber composition, evaluations of fuel economy performance, steering stability, durability, cracking resistance, and processability were performed by the following methods.

### Fuel economy performance

A test tire (tire size: 215/45R17) in which the obtained rubber composition was used in an undertread was prepared, mounted on a standard rim (rim size: 7JJ), and inflated to an air pressure of 230 kPa. Using an indoor drum testing machine (drum diameter: 1707 mm), rolling resistance was measured when the tire was driven at a speed of 80 km/h while pushed against the drum under a load equivalent to 85% of the maximum load at the air pressure described in the 2009 JATMA Year Book. The evaluation results are expressed as index values using the reciprocal of the measurement values, with the Standard Example 1 being assigned the index of 100. A larger index value indicates lower rolling resistance and superior fuel economy performance.

### Steering stability

Test tires (tire size: 215/45R17) in which the obtained rubber composition was used in an undertread were prepared, mounted on standard rims (rim size: 7JJ), inflated to an air pressure of 230 kPa, and mounted on a test vehicle with an engine displacement of 2000 cc. On a test course of paved road, sensory evaluation of surface responsiveness at the time of changing lanes during travel at 80 km/h was performed by a test driver. Evaluation results are expressed as index values, Standard Example 1 being assigned an index value of 100. A larger index value indicates better surface responsiveness at the time of changing lanes and indicates superior steering stability.

### Durability

Test tires (tire size: 215/45R17) in which the obtained rubber composition was used in an undertread were prepared, mounted on standard rims (rim size: 7JJ), inflated to an air pressure of 230 kPa, and mounted on a test vehicle with an engine displacement of 2000 cc. The test vehicle traveled on a figure-of-eight test course at a turning acceleration of 0.8 G for 500 laps, and the amount of wear of the tread portion after the travel was measured. The evaluation results are expressed as index values using the reciprocal of the measurement values, with the Standard Example 1 being assigned the index of 100. A larger index value indicates a smaller amount of wear and superior durability.

### Cracking resistance

A dumbbell-shaped JIS No. 3 test piece was cut out of the obtained test piece in accordance with JIS K6251. Using this test piece, the length of crack growth by repeated bending was measured by using De Mattia Flex Cracking Tester under a condition of a temperature of 23°C, a stroke of 40 mm, a speed of 300 ± 10 rpm, and bending for 100000 times, in accordance with JIS K 6260. Thereafter, presence of cracks on a test piece surface was visually observed and evaluated based on the following A to C. The obtained results are shown on the "cracking resistance" rows of Tables 1 to 3.
A: The number of cracks was small (approximately less than 10)
B: The number of cracks was large (approximately 10 or greater and less than 100)
C: There were countless cracks (approximately 100 or greater)

### Workability

The obtained rubber composition was extrusion-molded into a sheet shape, and two sheets of extrudate 3 hours after the extrusion (sample for compression bonding) was compression-bonded under a condition of a compression bonding load of 0.98 N, a compression bonding time of 0 second, and a compression bonding rate of 50 cm/min, and then released under a condition at a peeling rate of 125 cm/min, and the adhesive force at this time was measured by a PICMA Tack Tester (available from Toyo Seiki Seisaku-sho, Ltd.). The evaluation results were expressed in the following A to C. Note that "tackiness index" used for the evaluation of A to C was an index value using a measurement value, with the Standard Example 1 being assigned the index of 100.
A: Processability was extremely excellent (tackiness index was greater than 95)
B: Processability was excellent (tackiness index was greater than 80 and 95 or less)
C: Processability was poor (tackiness index was 80 or less)

**[Table 1-1]**

| | | Standard Example 1 | Comparative Example 1 | Comparative Example 2 | Comparative Example 3 |
|---|---|---|---|---|---|
| NR | Part by mass | 80 | 80 | 80 | 90 |
| SBR | Part by mass | | 20 | | |
| Modified S-SBR | Part by mass | | | 20 | |
| BR | Part by mass | 20 | | | |
| Modified BR 1 | Part by mass | | | | |
| Modified BR 2 | Part by mass | | | | |
| Modified BR 3 | Part by mass | | | | 10 |
| CB 1 | Part by mass | 50 | 50 | 50 | 50 |
| CB 2 | Part by mass | | | | |
| Silica 1 | Part by mass | 20 | 20 | 20 | 20 |
| Silica 2 | Part by mass | | | | |
| Total blended amount of fillers | Part by mass | 70 | 70 | 70 | 70 |
| Silica ratio | | 0.29 | 0.29 | 0.29 | 0.29 |
| Silane coupling agent | Part by mass | 1.6 | 1.6 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent 1 | Part by mass | 2.0 | 2.0 | 2.0 | 2.0 |
| Anti-aging agent 2 | Part by mass | 1.0 | 1.0 | 1.0 | 1.0 |
| Wax | Part by mass | | | | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 73 | 73 | 73 | 74 |
| Modulus of repulsion elasticity | % | 55 | 50 | 53 | 57 |
| Fuel economy performance | Index value | 100 | 91 | 96 | 104 |
| Steering stability | Index value | 100 | 100 | 100 | 101 |
| Durability | Index value | 100 | 100 | 98 | 88 |
| Cracking resistance | | B | B | B | B |
| Workability | | A | A | A | A |

**[Table 1-2]**

| | | Comparative Example 4 | Comparative Example 5 | Comparative Example 6 | Comparative Example 7 |
|---|---|---|---|---|---|
| NR | Part by mass | 80 | 80 | 80 | 60 |
| SBR | Part by mass | | | | |
| Modified S-SBR | Part by mass | | | | 30 |
| BR | Part by mass | | | | |
| Modified BR 1 | Part by mass | | | | |
| Modified BR 2 | Part by mass | | | | |
| Modified BR 3 | Part by mass | 20 | 20 | 20 | 10 |
| CB 1 | Part by mass | 65 | 40 | | 50 |
| CB 2 | Part by mass | | | 55 | |
| Silica 1 | Part by mass | | 20 | 20 | 20 |
| Silica 2 | Part by mass | | | | |
| Total blended amount of fillers | Part by mass | 65 | 60 | 60 | 70 |
| Silica ratio | | 0.00 | 0.33 | 0.33 | 0.29 |
| Silane coupling agent | Part by mass | | 1.6 | 1 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent 1 | Part by mass | 2.0 | 2.0 | 2.0 | 2.0 |
| Anti-aging agent 2 | Part by mass | 1.0 | 1.0 | 1.0 | 1.0 |
| Wax | Part by mass | | | | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 76 | 68 | 76 | 75 |
| Modulus of repulsion elasticity | % | 53 | 60 | 54 | 57 |
| Fuel economy performance | Index value | 96 | 109 | 98 | 104 |
| Steering stability | Index value | 104 | 93 | 102 | 100 |
| Durability | Index value | 88 | 88 | 101 | 88 |
| Cracking resistance | | B | B | B | B |
| Workability | | A | A | A | A |

**[Table 1-3]**

| | | Comparative Example 8 | Comparative Example 9 | Comparative Example 10 | Comparative Example 11 |
|---|---|---|---|---|---|
| NR | Part by mass | 80 | 80 | 80 | 80 |
| SBR | Part by mass | | | | |
| Modified S-SBR | Part by mass | | | | |
| BR | Part by mass | 20 | 20 | 20 | 20 |
| Modified BR 1 | Part by mass | | | | |
| Modified BR 2 | Part by mass | | | | |
| Modified BR 3 | Part by mass | | | | |
| CB 1 | Part by mass | 50 | 50 | 50 | 50 |
| CB 2 | Part by mass | | | | |
| Silica 1 | Part by mass | 20 | 20 | 20 | 20 |
| Silica 2 | Part by mass | | | | |
| Total blended amount of fillers | Part by mass | 70 | 70 | 70 | 70 |
| Silica ratio | | 0.29 | 0.29 | 0.29 | 0.29 |
| Silane coupling agent | Part by mass | 1.6 | 1.6 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent 1 | Part by mass | | 5.0 | | |
| Anti-aging agent 2 | Part by mass | 1.0 | 1.0 | 1.0 | 3.0 |
| Wax | Part by mass | | | 3.0 | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 74 | 71 | 72 | 72 |
| Modulus of repulsion elasticity | % | 55 | 53 | 55 | 55 |
| Fuel economy performance | Index value | 100 | 100 | 100 | 100 |
| Steering stability | Index value | 100 | 100 | 100 | 100 |
| Durability | Index value | 95 | 100 | 100 | 100 |
| Cracking resistance | | C | A | A | C |
| Workability | | A | C | C | C |

**[Table 2-1]**

| | | Example 1 | Example 2 | Example 3 | Example 4 |
|---|---|---|---|---|---|
| NR | Part by mass | 80 | 80 | 80 | 80 |
| SBR | Part by mass | | | | |
| Modified S-SBR | Part by mass | | | | |
| BR | Part by mass | | | | |
| Modified BR 1 | Part by mass | | | 20 | |
| Modified BR 2 | Part by mass | 20 | | | |
| Modified BR 3 | Part by mass | | 20 | | 20 |
| CB 1 | Part by mass | 50 | 50 | 50 | 60 |
| CB 2 | Part by mass | | | | |
| Silica 1 | Part by mass | 20 | 20 | 20 | 20 |
| Silica 2 | Part by mass | | | | |
| Total blended amount of fillers | Part by mass | 70 | 70 | 70 | 80 |
| Silica ratio | | 0.29 | 0.29 | 0.29 | 0.25 |
| Silane coupling agent | Part by mass | 1.6 | 1.6 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent | Part by mass | 2.0 | 2.0 | 2.0 | 2.0 |
| Anti-aging agent 2 | Part by mass | 1.0 | 1.0 | 1.0 | 1.0 |
| Wax | Part by mass | | | | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 74 | 73 | 73 | 78 |
| Modulus of repulsion elasticity | % | 62 | 63 | 62 | 60 |
| Fuel economy performance | Index value | 113 | 115 | 113 | 109 |
| Steering stability | Index value | 101 | 100 | 100 | 107 |
| Durability | Index value | 100 | 104 | 100 | 112 |
| Cracking resistance | | B | B | B | B |
| Workability | | A | A | A | A |

**[Table 2-2]**

| | | Example 5 | Example 6 | Example 7 | Example 8 |
|---|---|---|---|---|---|
| NR | Part by mass | 80 | 80 | 50 | 85 |
| SBR | Part by mass | | | | |
| Modified S-SBR | Part by mass | | | | |
| BR | Part by mass | | | | |
| Modified BR 1 | Part by mass | | | | |
| Modified BR 2 | Part by mass | | | | |
| Modified BR 3 | Part by mass | 20 | 20 | 50 | 15 |
| CB 1 | Part by mass | 35 | | 50 | 50 |
| CB 2 | Part by mass | | 10 | | |
| Silica 1 | Part by mass | 40 | | 20 | 20 |
| Silica 2 | Part by mass | | 40 | | |
| Total blended amount of fillers | Part by mass | 75 | 50 | 70 | 70 |
| Silica ratio | | 0.53 | 0.80 | 0.29 | 0.29 |
| Silane coupling agent | Part by mass | 3.2 | 1.6 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent | Part by mass | 2.0 | 2.0 | 2.0 | 2.0 |
| Anti-aging agent 2 | Part by mass | 1.0 | 1.0 | 1.0 | 1.0 |
| Wax | Part by mass | | | | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 75 | 64 | 74 | 74 |
| Modulus of repulsion elasticity | % | 61 | 72 | 66 | 60 |
| Fuel economy performance | Index value | 111 | 120 | 115 | 110 |
| Steering stability | Index value | 103 | 100 | 101 | 100 |
| Durability | Index value | 120 | 100 | 101 | 110 |
| Cracking resistance | | B | B | B | B |
| Workability | | A | A | A | A |

**[Table 3-1]**

| | | Example 9 | Example 10 | Example 11 | Example 12 |
|---|---|---|---|---|---|
| NR | Part by mass | 80 | 80 | 80 | 80 |
| SBR | Part by mass | | | | |
| Modified S-SBR | Part by mass | | | | |
| BR | Part by mass | | | | |
| Modified BR 1 | Part by mass | | | | |
| Modified BR 2 | Part by mass | | | | |
| Modified BR 3 | Part by mass | 20 | 20 | 20 | 20 |
| CB 1 | Part by mass | 63 | 35 | 52 | 52 |
| CB 2 | Part by mass | | | | |
| Silica 1 | Part by mass | 7 | 35 | 20 | 20 |
| Silica 2 | Part by mass | | | | |
| Total blended amount of fillers | Part by mass | 70 | 70 | 72 | 72 |
| Silica ratio | | 0.10 | 0.50 | 0.28 | 0.28 |
| Silane coupling agent | Part by mass | 0.56 | 2.8 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent | Part by mass | 2.0 | 2.0 | 3.0 | 1.0 |
| Anti-aging agent 2 | Part by mass | 1.0 | 1.0 | 1.0 | 1.0 |
| Wax | Part by mass | | | 1.0 | |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 79 | 74 | 73 | 74 |
| Modulus of repulsion elasticity | % | 60 | 60 | 63 | 62 |
| Fuel economy performance | Index value | 110 | 110 | 115 | 113 |
| Steering stability | Index value | 110 | 100 | 100 | 101 |
| Durability | Index value | 110 | 100 | 108 | 108 |
| Cracking resistance | | B | B | A | A |
| Workability | | A | A | A | A |

**[Table 3-2]**

| | | Example 13 | Example 14 | Example 15 | Example 16 |
|---|---|---|---|---|---|
| NR | Part by mass | 80 | 80 | 80 | 80 |
| SBR | Part by mass | | | | |
| Modified S-SBR | Part by mass | | | | |
| BR | Part by mass | | | | |
| Modified BR 1 | Part by mass | | | | |
| Modified BR 2 | Part by mass | | | | |
| Modified BR 3 | Part by mass | 20 | 20 | 20 | 20 |
| CB 1 | Part by mass | 52 | 52 | 52 | 52 |
| CB 2 | Part by mass | | | | |
| Silica 1 | Part by mass | 20 | 20 | 20 | 20 |
| Silica 2 | Part by mass | | | | |
| Total blended amount of fillers | Part by mass | 72 | 72 | 72 | 72 |
| Silica ratio | | 0.28 | 0.28 | 0.28 | 0.28 |
| Silane coupling agent | Part by mass | 1.6 | 1.6 | 1.6 | 1.6 |
| Zinc oxide | Part by mass | 3.0 | 3.0 | 3.0 | 3.0 |
| Stearic acid | Part by mass | 1.0 | 1.0 | 1.0 | 1.0 |
| Anti-aging agent | Part by mass | 4.0 | | | 2.0 |
| Anti-aging agent 2 | Part by mass | 1.0 | 1.0 | 1.0 | 1.0 |
| Wax | Part by mass | | 0.1 | 2.0 | 2.0 |
| Sulfur | Part by mass | 4.0 | 4.0 | 4.0 | 4.0 |
| Vulcanization accelerator | Part by mass | 2.0 | 2.0 | 2.0 | 2.0 |
| Hardness | | 73 | 74 | 73 | 73 |
| Modulus of repulsion elasticity | % | 61 | 62 | 62 | 62 |
| Fuel economy performance | Index value | 114 | 114 | 114 | 114 |
| Steering stability | Index value | 100 | 101 | 100 | 100 |
| Durability | Index value | 110 | 105 | 109 | 110 |
| Cracking resistance | | A | B | A | A |
| Workability | | A | A | A | B |

Types of raw materials used as indicated in Tables 1 to 3 are described below.
- NR: Natural rubber, TSR 20 (glass transition temperature Tg: -65°C)
- SBR: Styrene-butadiene rubber, Nipol 1502, available from Zeon Corporation (glass transition temperature: -60°C)
- Modified S-SBR: Terminal-modified solution polymerized styrene-butadiene rubber, Nipol NS612, available from Zeon Corporation (non-oil extended product, glass transition temperature Tg: -65°C, functional group: hydroxy group)
- BR: Butadiene rubber, Nipol BR1220, available from Zeon Corporation (glass transition temperature Tg: -105°C)
- Modified BR 1: Terminal-modified butadiene rubber, BR54, available from JSR Corporation (glass transition temperature Tg: -107°C, functional group: silanol group, molecular weight distribution: 2.5)
- Modified BR 2: Terminal-modified butadiene rubber synthesized by the following method (glass transition temperature Tg: -93°C, functional group: polyorganosiloxane group)
- Modified BR 3: Terminal-modified butadiene rubber, Nipol BR1250H, available from Zeon Corporation (glass transition temperature Tg: -96°C, functional group: N-methylpyrrolidone group, molecular weight distribution: 1.1)
- CB 1: Carbon black, Niteron #300 IH, available from NSCC Carbon Co., Ltd. (nitrogen adsorption specific surface area N₂SA: 115 m²/g)
- CB 2: Carbon black, Niteron #430, available from NSCC Carbon Co., Ltd. (nitrogen adsorption specific surface area N₂SA: 134 m²/g)
- Silica 1: Ultrasil VN3, available from Degussa (CTAB adsorption specific surface area: 153 m²/g)
- Silica 2: Zeosil Premium 200MP, available from Rhodia (CTAB adsorption specific surface area: 210 m²/g)
- Silane coupling agent: Si69, available from Evonic Degussa Corporation
- Zinc oxide: Zinc Oxide Type III, available from Seido Chemical Industry Co., Ltd.
- Stearic Acid: Lunac S-25, available from Kao Corporation
- Anti-aging agent 1: Amine-based anti-aging agent, Santflex 6PPD, available from Flexsys
- Anti-aging agent 2: Amine-ketone-based anti-aging agent, Nocrac 224, available from Ouchi Shinko Chemical Industrial Co., Ltd.
- Wax: SANNOC, available from Ouchi Shinko Chemical Industrial Co., Ltd.
- Sulfur: MUCRON OT-20, available from Shikoku Chemicals Corporation.
- Vulcanization accelerator: NOCCELER CZ, available from Ouchi Shinko Chemical Industrial Co., Ltd.

### Synthesizing method of modified BR 2

In an autoclave with a stirrer, 5670 g of cyclohexane, 700 g of 1,3-butadiene, and 0.17 mmol of tetramethylethylenediamine were charged in a nitrogen atmosphere, and then n-butyllithium in an amount that was necessary to neutralize impurities that inhibit polymerization and that were contained in the cyclohexane and the 1,3-butadiene was added, and 8.33 mmol of n-butyllithium that was used in the polymerization reaction was added. Then, polymerization was started at 50°C. Twenty minutes after the start of the polymerization, 300 g of 1,3-butadiene was continuously added over 30 minutes. The maximum temperature during the polymerization reaction was 80°C. After completion of the continuous addition, the polymerization reaction was further continued for another 15 minutes, and a little amount of the polymerization solution was sampled after it was confirmed that the polymer conversion rate was in the range from 95% to 100%. For the small amount of the sampled polymerization solution, an excessive amount of methanol was added to terminate the reaction, then air-drying was performed, and thus a polymer was obtained and used as a sample for gel permeation chromatography (GPC) analysis. By using the sample, the molecular weight of the peak maxima and the molecular weight distribution of the polymer (corresponded to the conjugated diene-based polymer chain having an active terminal) were measured, and the molecular weight of the peak maxima was 230000 and the molecular weight distribution was 1.04.

Immediately after the small amount of the polymerization solution was sampled, in the polymerization solution, 0.288 mmol of 1,6-bis(trichlorosilyl)hexane (corresponded to 0.0345 times the number of moles of n-butyllithium used in the polymerization) in a form of a 40 wt.% cyclohexane solution was added and reacted for 30 minutes. Then, 0.0382 mmol of polyorganosiloxane A (corresponded to 0.00459 times the number of moles of n-butyllithium used in the polymerization) in a form of a 20 wt.% xylene solution was further added and reacted for 30 minutes. Thereafter, methanol in an amount equivalent to twice the number of moles of n-butyllithium used was added as a polymerization terminator. In this way, a solution containing the modified butadiene rubber was obtained. To this solution, per 100 parts of the rubber component, 0.2 parts of 2,4-bis(n-octylthiomethyl)-6-methylphenol as an anti-aging agent was added, and then the solvent was removed by steam stripping. The mixture was vacuum-dried at 60°C for 24 hours, and thus a solid modified butadiene rubber (modified BR 2) was obtained. For this modified butadiene rubber (modified BR 2), the weight average molecular weight, molecular weight distribution, coupling ratio, vinyl bond content, and Mooney viscosity were measured. The weight average molecular weight was 510000, the molecular weight distribution was 1.46, the coupling ratio was 28%, the vinyl bond content was 11 mass%, and the Mooney viscosity was 46.

As can be seen from Tables 1 to 3, the rubber compositions (tires) of Examples 1 to 16 improved the fuel economy performance, steering stability, and durability in a well-balanced manner with respect to those of Standard Example 1. Furthermore, excellent cracking resistance and processability that were equivalent or better than those of Standard Example 1 were exhibited.

On the other hand, because the rubber composition (tire) of Comparative Example 1 contained a styrene-butadiene rubber in place of the terminal-modified butadiene rubber, fuel economy performance was deteriorated. Because the rubber composition (tire) of Comparative Example 2 contained a terminal-modified solution polymerized styrene-butadiene rubber in place of the terminal-modified butadiene rubber, fuel economy performance and durability were deteriorated. Because, in the rubber composition (tire) of Comparative Example 3, the blended amount of the terminal-modified butadiene rubber was too small, durability was deteriorated. Because the rubber composition (tire) of Comparative Example 4 contained no silica, fuel economy performance and durability were deteriorated. Because the rubber composition (tire) of Comparative Example 5 had a too small hardness, steering stability and durability were deteriorated. Because the rubber composition (tire) of Comparative Example 6 had a too small modulus of repulsion elasticity, heat build-up was deteriorated. Because the rubber composition (tire) of Comparative Example 7 contained a styrene-butadiene rubber in addition to the natural rubber and the terminal-modified butadiene rubber, durability was deteriorated. Because the rubber composition (tire) of Comparative Example 8 contained no terminal-modified butadiene rubber, effect of improving fuel economy performance and steering stability performance was not achieved, and furthermore, because only the anti-aging agent that was not amine-based was blended, cracking resistance and durability were deteriorated. Because the rubber composition (tire) of Comparative Example 9 contained no terminal-modified butadiene rubber, effect of improving fuel economy performance, steering stability performance, and durability was not achieved, and furthermore, because the blended amount of the anti-aging agent was too large, processability was deteriorated. Because the rubber composition (tire) of Comparative Example 10 contained no terminal-modified butadiene rubber, effect of improving fuel economy performance, steering stability performance, and durability was not achieved, and furthermore, because the blended amount of the wax was too large, processability was deteriorated. Because the rubber composition (tire) of Comparative Example 11 contained no terminal-modified butadiene rubber, effect of improving fuel economy performance, steering stability performance, and durability was not achieved, and furthermore, because only a large amount of the anti-aging agent that was not amine-based was blended, cracking resistance and processability were deteriorated.

## Claims

1. A rubber composition for tires, the rubber composition comprising
a rubber component containing 50 mass% or greater of a natural rubber and from 15 mass% to 50 mass% of a terminal-modified butadiene rubber per 100 parts by mass of the rubber component, and
a filler containing carbon black and silica that is blended into the rubber component at a mass ratio from 0.1 to 0.5 between a blended amount of the silica and a blended amount of the filler,
the rubber composition having a hardness of 73 or greater, and a modulus of repulsion elasticity at 40°C of 60% or greater, wherein
the hardness of the rubber composition was measured at a temperature of 20°C by a type A durometer in accordance with JIS K 6253 and
the modulus of repulsion elasticity of the rubber composition was measured at a temperature of 40°C by a Luepke impact resilience tester in accordance with JIS K 6255.

2. The rubber composition for tires according to claim 1, having
a molecular weight distribution (Mw/Mn) of 2.0 or less that is determined based on a weight average molecular weight (Mw) and a number average molecular weight (Mn) of the terminal-modified butadiene rubber.

3. The rubber composition for tires according to claim 1 or 2, wherein
a functional group at a terminal of the terminal-modified butadiene rubber is at least one selected from the group consisting of a hydroxy group, an amino group, an amide group, an alkoxyl group, an epoxy group, and a siloxane linking group.

4. The rubber composition for tires according to any one of claims 1 to 3, wherein
a blended amount of the filler per 100 parts by mass of the rubber component is 55 parts by mass or greater.

5. The rubber composition according to any one of claims 1 to 4, wherein from 1.0 part by mass to 4.0 parts by mass of an amine-based anti-aging agent is blended per 100 parts by mass of the rubber component.

6. The rubber composition according to any one of claims 1 to 5, wherein greater than 0 parts by mass but not greater than 2.0 parts by mass of a wax is blended per 100 parts by mass of the rubber component.

7. A pneumatic tire comprising the rubber composition for tires according to any one of claims 1 to 6 in an undertread portion.

## Patentansprüche

1. Kautschukzusammensetzung für Reifen, die Kautschukzusammensetzung umfassend:
einen Kautschukbestandteil, der zu 50Masse-% oder mehr Naturkautschuk und zu 15 bis 50 Masse-% endständig modifizierten Butadienkautschuk pro 100 Massenteile des Kautschukbestandteils enthält, und
einen Füllstoff, der Ruß und Silica enthält, der in den Kautschukbestandteil in einem Massenverhältnis von 0,1 bis 0,5 zwischen einer beigemischten Menge des Silica und einer beigemischten Menge des Füllstoffs beigemischt wird,
wobei die Kautschukzusammensetzung eine Härte von 73 oder mehr und einen Abstoßungselastizitätsmodul bei 40 °C von 60 % oder mehr aufweist, wobei
die Härte der Kautschukzusammensetzung bei einer Temperatur von 20 °C durch ein Typ-A-Durometer gemäß JIS K 6253 gemessen wurde und
der Abstoßungselastizitätsmodul der Kautschukzusammensetzung bei einer Temperatur von 40 °C durch ein Luepke-Schlagelastizitätsprüfgerät gemäß JIS K 6255 gemessen wurde.

2. Kautschukzusammensetzung für Reifen gemäß Anspruch 1, die eine Molekulargewichtsverteilung (Mw/Mn) von 2,0 oder weniger aufweist, die basierend auf einem Molekulargewicht (Gewichtsmittel) (Mw) und einem Molekulargewicht (Zahlenmittel) (Mn) des endständig modifizierten Butadienkautschuks bestimmt wird.

3. Kautschukzusammensetzung für Reifen gemäß Anspruch 1 oder 2, wobei eine funktionelle Gruppe an einem Ende des endständig modifizierten Butadienkautschuks mindestens eine ist, die aus der Gruppe ausgewählt ist, bestehend aus einer Hydroxygruppe, einer Aminogruppe, einer Amidgruppe, einer Alkoxygruppe, einer Epoxygruppe und einer Siloxanverknüpfungsgruppe.

4. Kautschukzusammensetzung für Reifen gemäß einem der Ansprüche 1 bis 3, wobei
die beigemischte Menge des Füllstoffs pro 100 Massenteile des Kautschukbestandteils 55 Massenteile oder mehr beträgt.

5. Kautschukzusammensetzung gemäß einem der Ansprüche 1 bis 4, wobei von zu 1,0 Massenteilen bis 4,0 Massenteilen ein aminbasiertes Alterungsschutzmittel pro 100 Massenteile dem Kautschukbestandteil beigemischt wird.

6. Kautschukzusammensetzung gemäß einem der Ansprüche 1 bis 5, wobei mehr als zu 0 Massenteile aber nicht mehr als zu 2,0 Massenteile ein Wachs pro 100 Massenteile des Kautschukbestandteils beigemischt sind.

7. Luftreifen, umfassend die Kautschukzusammensetzung für Reifen gemäß einem der Ansprüche 1 bis 6 in einem Grundgummiabschnitt.

## Revendications

1. Composition de caoutchouc pour pneumatiques, la composition de caoutchouc comprenant
un composant en caoutchouc contenant 50 % en masse ou plus de caoutchouc naturel et de 15 % en masse à 50 % en masse de caoutchouc butadiène modifié en phase terminale pour 100 parties en masse du composant en caoutchouc, et
une charge contenant du noir de carbone et de la silice qui est mélangée au composant en caoutchouc dans un rapport de masse de 0,1 à 0,5 entre une quantité mélangée de silice et une quantité mélangée de charge,
la composition de caoutchouc a une dureté égale ou supérieure à 73 et un module d'élasticité de répulsion à 40 °C égal ou supérieur à 60 %, dans laquelle
la dureté de la composition de caoutchouc a été mesurée à une température de 20 °C par un duromètre de type A conformément à la norme JIS K 6253 et
le module d'élasticité de répulsion de la composition de caoutchouc a été mesuré à une température de 40 °C par un testeur de résilience d'impact Luepke conformément à la norme JIS K 6255.

2. Composition de caoutchouc pour pneumatiques selon la revendication 1, ayant une distribution de poids moléculaire (Mw/Mn) de 2,0 ou moins, déterminée sur la base d'un poids moléculaire moyen en poids (Mw) et d'un poids moléculaire moyen en nombre (Mn) du caoutchouc butadiène modifié en phase terminale.

3. Composition de caoutchouc pour pneumatiques selon la revendication 1 ou 2, dans laquelle un groupe fonctionnel à une extrémité du caoutchouc butadiène modifié à l'extrémité est au moins choisi dans le groupe constitué d'un groupe hydroxy, d'un groupe amino, d'un groupe amide, d'un groupe alcoxyle, d'un groupe époxy et d'un groupe de liaison siloxane.

4. Composition de caoutchouc pour pneumatiques selon l'une quelconque des revendications 1 à 3, dans laquelle
une quantité mélangée de la charge pour 100 parties en masse du composant en caoutchouc est égale ou supérieure à 55 parties en masse.

5. Composition de caoutchouc selon l'une quelconque des revendications 1 à 4, dans laquelle de 1,0 partie en masse à 4,0 parties en masse d'un agent antivieillissement à base d'amine est mélangé pour 100 parties en masse du composant de caoutchouc.

6. Composition de caoutchouc selon l'une quelconque des revendications 1 à 5, dans laquelle plus de 0 partie en masse mais pas plus de 2,0 parties en masse d'une cire sont mélangées pour 100 parties en masse du composant de caoutchouc.

7. Pneumatique comprenant la composition de caoutchouc pour pneumatiques selon l'une quelconque des revendications 1 à 6 dans une portion de sous-chape.
